# EUROPEAN PATENT APPLICATION

(11) **EP 1 898 161 A1**
(43) Date of publication of application: **12.03.2008**
(21) Application number: 06746813.2
(22) Date of filing: 24.05.2006
(51) Int. Cl.: F24F 3/14, F24F 11/02

(54) **HUMIDITY CONTROL DEVICE**

(30) Priority: 24.05.2005 JP 2005150805
(71) Applicant: DAIKIN INDUSTRIES, LTD., Osaka-shi, Osaka 530-8323 (JP)
(72) Inventor: Matsui, Nobuki, Sakai Plant, Daikin Ind., Ltd., Osaka 5918511 (JP)
(74) Representative: HOFFMANN EITLE
(86) International application number: PCT/JP2006/310384
(87) International publication number: WO 2006/126605

(57) **Abstract**

A humidity control system (10) includes a refrigerant circuit (50) to which two adsorption heat exchangers (51, 52) are connected. In the humidity control system (10), air is humidified in the adsorption heat exchanger (51, 52) working as the condenser while air is dehumidified in the adsorption heat exchanger (51, 52) working as the evaporator. If during the dehumidification operation the actually measured value of the room temperature is lower than the selected value of the room temperature or if during the humidification operation the actually measured value of the room temperature is higher than the selected value of the room temperature, the performance of a compressor (53) is controlled such that the actually measured value of the room temperature equals the selected value of the room temperature.

## Description

### TECHNICAL FIELD

The present invention relates to humidity control systems for supplying the air which has been humidity-controlled using an adsorbent to rooms.

### BACKGROUND ART

Conventionally-known humidity control systems for controlling air humidity include a humidity control system including an adsorption heat exchanger as disclosed in Patent Document 1.

More specifically, in a humidity control system disclosed in Patent Document 1, an adsorption heat exchanger carrying an adsorbent on its surface is connected to a refrigerant circuit. The operation of a compressor allows the refrigerant circuit to perform a vapor compression refrigeration cycle by circulating refrigerant therethrough. For the refrigerant circuit for performing the refrigeration cycle, in an adsorption heat exchanger serving as an evaporator, moisture in the air passing therethrough is adsorbed by the adsorbent, and the heat of adsorption produced during the adsorption is taken by the refrigerant. In an adsorption heat exchanger serving as a condenser, the adsorbent on the surface of the adsorption heat exchanger is heated by the refrigerant, and the moisture desorbed from the adsorbent is applied to the air passing therethrough.

This humidity control system is switchable between a dehumidification operation for supplying air dehumidified by the adsorption heat exchanger serving as the evaporator to a room and a humidification operation for supplying air humidified by the adsorption heat exchanger serving as the condenser to the room.
Patent Document 1: Japanese Laid-Open Patent Publication No. 2004-294048.

### DISCLOSURE OF INVENTION

### Problems that the Invention is to Solve

As described above, in this type of humidity control system, air dehumidification is performed by the adsorption heat exchanger serving as an evaporator. Therefore, the air passage through the adsorption heat exchanger often reduces not only the humidity of the air but also the temperature thereof. In such a case, during a dehumidification operation, the air whose humidity and temperature both are reduced is supplied to rooms. Thus, in the case of a dehumidification operation performed under a small cooling load in rooms, the room temperature could become too low to provide comfort.

Furthermore, in the humidity control system, air humidification is performed by the adsorption heat exchanger serving as a condenser. Therefore, the air passage through the adsorption heat exchanger often increases not only the humidity of the air but also the temperature thereof. In such a case, during a humidification operation, the air whose humidity and temperature both are increased is supplied to rooms. Thus, in the case of a humidification operation performed under a small heating load in rooms, the room temperature could become too high to provide comfort.

The present invention has been made in view of the above circumstances and, therefore, its object is to allow a humidity control system that is highly likely to change the air temperature in the process of controlling the air humidity to ensure the comfort of rooms.

### Means of Solving the Problems

Each of the first, second, third, fifth and sixth inventions is directed to a humidity control system including a refrigerant circuit **(50)** running a refrigeration cycle to which an adsorption heat exchanger **(51, 52)** carrying an adsorbent is connected, wherein the humidity control system controls the humidity of air which is in contact with an adsorbent of the adsorption heat exchanger **(51, 52)** by heating or cooling the adsorbent with a refrigerant of the refrigerant circuit **(50)** and performs a humidification operation of supplying humidified air to a room or a dehumidification operation of supplying dehumidified air to a room.

The first invention includes a controller **(90)** which stops a compressor **(53)** of the refrigerant circuit **(50)** if during the dehumidification operation an actually measured value of the room temperature is lower than a selected value of the room temperature by a predetermined temperature difference or more or if during the humidification operation the actually measured value of the room temperature is higher than the selected value of the room temperature by a predetermined temperature difference or more.

In the first invention, a refrigeration cycle is run by circulation of the refrigerant in the refrigerant circuit **(50).** In the refrigerant circuit **(50),** at the adsorption heat exchanger **(51, 52)** working as an evaporator, the adsorbent carried thereon is cooled by the refrigerant and moisture of air passing through this adsorption heat exchanger **(51, 52)** is adsorbed by the adsorbent. During the dehumidification operation, the air which has passed through the adsorption heat exchanger **(51, 52)** working as the evaporator is supplied to the room. In the refrigerant circuit **(50),** at the adsorption heat exchanger **(51, 52)** working as a condenser, the adsorbent carried thereon is heated by the refrigerant and moisture released from the adsorbent is given to air passing through this adsorption heat exchanger **(51, 52).** During the humidification operation, the air which has passed through the adsorption heat exchanger **(51, 52)** working as the condenser is supplied to the room.

If the dehumidification operation is carried out in a small cooling load condition, e.g., in a midseason, the air whose temperature has been lowered during passage through the adsorption heat exchanger **(51, 52)** working as the evaporator is supplied to the room, so that in some cases the actually measured value of the room temperature would be lower than the selected value of the room temperature. In such a case, the controller **(90)** of the first invention stops the operation of the compressor **(53)** such that an excessive decrease in the room temperature is avoided. If the humidification operation is carried out in a small heating load condition, the air whose temperature has been raised during passage through the adsorption heat exchanger **(51, 52)** working as the condenser is supplied to the room, so that in some cases the actually measured value of the room temperature would be higher than the selected value of the room temperature. In such a case, the controller **(90)** of the first invention stops the operation of the compressor **(53)** such that an excessive increase in the room temperature is avoided.

The second invention is directed to the humidity control system wherein the humidity control system includes a controller **(90)** for controlling the performance of a compressor **(53)** of the refrigerant circuit **(50),** and the controller **(90)** is configured to perform a temperature control operation of reducing the performance of the compressor **(53)** of the refrigerant circuit **(50)** if during the dehumidification operation an actually measured value of the room temperature is lower than a selected value of the room temperature by a predetermined temperature difference or more or if during the humidification operation the actually measured value of the room temperature is higher than the selected value of the room temperature by a predetermined temperature difference or more.

In the second invention, the refrigeration cycle is run in the refrigerant circuit (50) as in the first invention, such that dehumidification or humidification of air is carried out in the adsorption heat exchanger **(51, 52).**

The controller **(90)** of the second invention performs a temperature control operation. If during the dehumidification operation the actually measured value of the room temperature is lower than the selected value of the room temperature, the controller **(90)** carrying on the temperature control operation decreases the performance of the compressor **(53)** such that the amount of refrigerant circulated in the refrigerant circuit **(50)** is reduced, whereby the decrease in temperature of the air passing through the adsorption heat exchanger **(51, 52)** working as the evaporator is suppressed. If during the humidification operation the actually measured value of the room temperature is higher than the selected value of the room temperature, the controller **(90)** carrying on the temperature control operation decreases the performance of the compressor **(53)** such that the amount of refrigerant circulated in the refrigerant circuit **(50)** is reduced, whereby the increase in temperature of the air passing through the adsorption heat exchanger **(51, 52)** working as the condenser is suppressed.

The third invention is directed to the humidity control system wherein the humidity control system includes a controller **(90)** for controlling the performance of a compressor **(53)** of the refrigerant circuit **(50)** based on a target value of a room humidity, and the controller **(90)** is configured to perform a temperature control operation such that if during the dehumidification operation an actually measured value of the room temperature is lower than a selected value of the room temperature by a predetermined temperature difference or more, the controller **(90)** forcibly increases the target value of the room humidity, and if during the humidification operation the actually measured value of the room temperature is higher than the selected value of the room temperature by a predetermined temperature difference or more, the controller **(90)** forcibly decreases the target value of the room humidity.

In the third invention, the refrigeration cycle is run in the refrigerant circuit **(50)** as in the first invention, such that dehumidification or humidification of air is carried out in the adsorption heat exchanger **(51, 52).**

The controller **(90)** of the third invention performs a temperature control operation. If during the dehumidification operation the actually measured value of the room temperature is lower than the selected value of the room temperature, the controller **(90)** carrying on the temperature control operation forcibly increases the target value of the room humidity. In this case, the controller **(90)** controls the performance of the compressor **(53)** based on a target value set slightly higher. Thus, the amount of heat exchanged in the adsorption heat exchanger **(51, 52)** working as the evaporator decreases, so that the decrease in temperature of the air passing through this adsorption heat exchanger **(51, 52)** is suppressed. If during the humidification operation the actually measured value of the room temperature is higher than the selected value of the room temperature, the controller **(90)** carrying on the temperature control operation forcibly decreases the target value of the room humidity. In this case, the controller **(90)** controls the performance of the compressor **(53)** based on a target value set slightly lower. Thus, the amount of heat exchanged in the adsorption heat exchanger **(51, 52)** working as the condenser decreases, so that the increase in temperature of the air passing through this adsorption heat exchanger **(51, 52)** is suppressed.

The fourth invention is directed to the second or third invention wherein the controller **(90)** is configured to stop the compressor **(53)** if the actually measured value of the room temperature continues to be lower than the selected value of the room temperature by the predetermined temperature difference or more during the dehumidification operation, or higher than the selected value of the room temperature by the predetermined temperature difference or more during the humidification operation, even after the lapse of a predetermined time since the start of the temperature control operation.

In the fourth invention, the controller **(90)** again compares the actually measured value of the room temperature and the selected value of the room temperature after the lapse of a predetermined time since the start of the temperature control operation. If there is a certain difference between the actually measured value and the selected value of the room temperature even at this point in time, the controller **(90)** determines that the change in room temperature cannot be avoided so long as the operation of the compressor **(53)** continues, and therefore stops the compressor **(53).**

The fifth invention is directed to the humidity control system wherein the humidity control system includes a controller **(90)** capable of performing a performance control operation of controlling the performance of a compressor **(53)** of the refrigerant circuit **(50)** such that the temperature of air supplied into the room becomes equal to a predetermined target supply air temperature, and the controller **(90)** is configured to operate such that if during the dehumidification operation an actually measured value of the room temperature is lower than a selected value of the room temperature by a predetermined temperature difference or more, the controller **(90)** performs the performance control operation with the target supply air temperature being set to a value equal to or higher than the selected value of the room temperature, and if during the humidification operation the actually measured value of the room temperature is higher than the selected value of the room temperature by a predetermined temperature difference or more, the controller **(90)** performs the performance control operation with the target supply air temperature being set to a value equal to or lower than the selected value of the room temperature.

In the fifth invention, the refrigeration cycle is run in the refrigerant circuit **(50)** as in the first invention, such that dehumidification or humidification of air is carried out in the adsorption heat exchanger **(51, 52).**

The controller **(90)** of the fifth invention performs a performance control operation. If during the dehumidification operation the actually measured value of the room temperature is lower than the selected value of the room temperature, the controller **(90)** carrying on the performance control operation sets the target supply air temperature to a value equal to or higher than the selected value of the room temperature. In this case, the controller **(90)** controls the performance of the compressor **(53)** such that the temperature of air supplied to the room (i.e., supply air temperature) equals to the target supply air temperature set slightly higher. Thus, the temperature of air supplied to the room during the dehumidification operation increases so that the decrease in room temperature is suppressed. If during the humidification operation the actually measured value of the room temperature is higher than the selected value of the room temperature, the controller **(90)** carrying on the performance control operation sets the target supply air temperature to a value equal to or lower than the selected value of the room temperature. In this case, the controller **(90)** controls the performance of the compressor **(53)** such that the temperature of air supplied to the room (i.e., supply air temperature) equals to the target supply air temperature set slightly lower. Thus, the temperature of air supplied to the room during the humidification operation decreases so that the increase in room temperature is suppressed.

The sixth invention is directed to the humidity control system wherein the humidity control system includes a controller **(90)** capable of performing a performance control operation of controlling the performance of a compressor **(53)** of the refrigerant circuit **(50)** such that during the dehumidification operation the refrigerant evaporation temperature in the adsorption heat exchanger **(51, 52)** becomes equal to a predetermined target evaporation temperature and such that during the humidification operation the refrigerant condensation temperature in the adsorption heat exchanger **(51, 52)** becomes equal to a predetermined target condensation temperature, the controller **(90)** is configured to operate such that if during the dehumidification operation an actually measured value of the room temperature is lower than a selected value of the room temperature by a predetermined temperature difference or more, the controller **(90)** performs the performance control operation with the target evaporation temperature being set to a value equal to or higher than the selected value of the room temperature, and if during the humidification operation the actually measured value of the room temperature is higher than the selected value of the room temperature by a predetermined temperature difference or more, the controller **(90)** performs the performance control operation with the target condensation temperature being set to a value equal to or lower than the selected value of the room temperature.

In the sixth invention, the refrigeration cycle is run in the refrigerant circuit (50) as in the first invention, such that dehumidification or humidification of air is carried out in the adsorption heat exchanger **(51, 52).**

The controller **(90)** of the sixth invention performs a performance control operation. If during the dehumidification operation the actually measured value of the room temperature is lower than the selected value of the room temperature, the controller **(90)** carrying on the performance control operation sets the target evaporation temperature to a value equal to or higher than the selected value of the room temperature. In this case, the controller **(90)** controls the performance of the compressor **(53)** such that the refrigerant evaporation temperature in the adsorption heat exchanger **(51, 52)** is equal to or higher than the selected value of the room temperature. Thus, the temperature of air supplied to the room during the dehumidification operation increases so that the decrease in room temperature is suppressed. If during the humidification operation the actually measured value of the room temperature is higher than the selected value of the room temperature, the controller **(90)** carrying on the performance control operation sets the target condensation temperature to a value equal to or lower than the selected value of the room temperature. In this case, the controller **(90)** controls the performance of the compressor **(53)** such that the refrigerant condensation temperature in the adsorption heat exchanger **(51, 52)** is equal to or lower than the selected value of the room temperature. Thus, the temperature of air supplied to the room during the humidification operation increases so that the increase in room temperature is suppressed.

The seventh invention is directed to the fifth or sixth invention wherein the controller (90) is configured to stop the compressor **(53)** if the actually measured value of the room temperature continues to be lower than the selected value of the room temperature by the predetermined temperature difference or more during the dehumidification operation, or higher than the selected value of the room temperature by the predetermined temperature difference or more during the humidification operation, even after the lapse of a predetermined time since the start of the performance control operation.

In the seventh invention, the controller **(90)** again compares the actually measured value of the room temperature and the selected value of the room temperature after the lapse of a predetermined time since the start of the performance control operation. If there is a certain difference between the actually measured value and the selected value of the room temperature even at this point in time, the controller **(90)** determines that the change in room temperature cannot be avoided so long as the operation of the compressor **(53)** continues, and therefore stops the compressor **(53).**

Each of the eighth, ninth, and tenth inventions is directed to a humidity control system including a refrigerant circuit **(50)** to which first and second adsorption heat exchangers **(51, 52)** each carrying an adsorbent are connected, wherein the humidity control system alternately performs a first refrigeration cycle operation where one of the first and second adsorption heat exchangers **(51, 52)** works as a condenser and the other works as an evaporator and a second refrigeration cycle operation where the one of the first and second adsorption heat exchangers **(51, 52)** works as an evaporator and the other works as a condenser, and the humidity control system humidifies air in the adsorption heat exchanger **(51, 52)** working as the condenser while simultaneously dehumidifying air in the adsorption heat exchanger **(51, 52)** working as the evaporator and performs a dehumidification operation of supplying the dehumidified air to a room or a humidification operation of supplying the humidified air to a room.

The eighth invention is directed to the humidity control system wherein the humidity control system includes a controller **(90)** which shortens a time interval at which the first refrigeration cycle operation and the second refrigeration cycle operation are switched if during the dehumidification operation an actually measured value of the room temperature is lower than a selected value of the room temperature by a predetermined temperature difference or more or if during the humidification operation the actually measured value of the room temperature is higher than the selected value of the room temperature by a predetermined temperature difference or more.

In the eighth invention, a refrigeration cycle is run by circulation of the refrigerant in the refrigerant circuit **(50).** In the refrigerant circuit **(50),** at the adsorption heat exchanger **(51, 52)** working as an evaporator, the adsorbent carried thereon is cooled by the refrigerant and moisture of air passing through this adsorption heat exchanger **(51, 52)** is adsorbed by the adsorbent. In the refrigerant circuit **(50),** at the adsorption heat exchanger **(51, 52)** working as a condenser, the adsorbent carried thereon is heated by the refrigerant and moisture released from the adsorbent is given to air passing through this adsorption heat exchanger **(51, 52).** In the first refrigeration cycle operation, air is dehumidified in the second adsorption heat exchanger **(52)** while air is humidified in the first adsorption heat exchanger **(51).** On the other hand, in the second refrigeration cycle operation, air is dehumidified in the first adsorption heat exchanger **(51)** while air is humidified in the second adsorption heat exchanger **(52).** During the dehumidification operation, air which has passed through the adsorption heat exchanger **(51, 52)** working as the evaporator is supplied to the room. During the humidification operation, air which has passed through the adsorption heat exchanger **(51, 52)** working as the condenser is supplied to the room.

If the dehumidification operation is carried out in a small cooling load condition, e.g., in a midseason, the air whose temperature has been lowered during passage through the adsorption heat exchanger **(51, 52)** working as the evaporator is supplied to the room, so that in some cases the actually measured value of the room temperature would be lower than the selected value of the room temperature. If the humidification operation is carried out in a small heating load condition, the air whose temperature has been raised during passage through the adsorption heat exchanger **(51, 52)** working as the condenser is supplied to the room, so that in some cases the actually measured value of the room temperature would be higher than the selected value of the room temperature. In such a case, the controller **(90)** of the eighth invention shortens the time interval of the first refrigeration cycle operation and the second refrigeration cycle operation.

Between the adsorption heat exchanger **(51, 52)** and air passing therethrough, a relatively large amount of moisture is exchanged immediately after switching between the first refrigeration cycle operation and the second refrigeration cycle operation. The adsorption heat produced when moisture is adsorbed on the adsorption heat exchanger **(51, 52)** increases with an increase in the amount of the adsorbed moisture. In the adsorption heat exchanger **(51, 52)** functioning as an evaporator, the decrement of the temperature of the passing air is reduced depending on the increment of the adsorption heat adsorbed by the refrigerant. Furthermore, the amount of heat required for desorbing moisture from the adsorption heat exchanger **(51, 52)** increases with an increase in the amount of moisture to be desorbed. In the adsorption heat exchanger **(51, 52)** functioning as a condenser, the increment of temperature of the passing air is reduced depending on the increment of amount of heat required for desorbing moisture from the adsorbent. Therefore, when the controller **(90)** shortens the time interval of the first refrigeration cycle operation and the second refrigeration cycle operation, the change (increment/decrement) in temperature of the air passing through the adsorption heat exchanger **(51, 52)** continues to be small. If it occurs during the dehumidification operation, the temperature of air supplied to the room increases. If it occurs during the humidification operation, the temperature of air supplied to the room decreases.

The ninth invention is directed to the humidity control system wherein the humidity control system includes a controller **(90)** which extends a time interval at which the first refrigeration cycle operation and the second refrigeration cycle operation are switched if during the dehumidification operation an actually measured value of the room temperature is lower than a selected value of the room temperature by a predetermined temperature difference or more or if during the humidification operation the actually measured value of the room temperature is higher than the selected value of the room temperature by a predetermined temperature difference or more.

In the ninth invention, the first refrigeration cycle operation and the second refrigeration cycle operation are alternately performed as in the eighth invention, such that dehumidification or humidification of air is carried out in the adsorption heat exchanger **(51, 52).**

When the dehumidification operation is carried out in a large cooling load condition, e.g., in summer, the actually measured value of the room temperature would be higher than the selected value of the room temperature in some cases even if the air whose temperature has been lowered during passage through the adsorption heat exchanger **(51, 52)** working as the evaporator is supplied to the room. When the dehumidification operation is carried out in a large heating load condition, e.g., in winter, the actually measured value of the room temperature would be lower than the selected value of the room temperature in some cases even if the air whose temperature has been raised during passage through the adsorption heat exchanger **(51, 52)** working as the condenser is supplied to the room. In such a case, the controller **(90)** of the ninth invention extends the time interval of the first refrigeration cycle operation and the second refrigeration cycle operation.

Immediately after switching between the first refrigeration cycle operation and the second refrigeration cycle operation, the amount of moisture exchanged between the adsorption heat exchanger **(51, 52)** and air increases as described in the description of the eighth invention. Accordingly, the change (increment/decrement) in temperature of the air passing through the adsorption heat exchanger **(51, 52)** decreases. Oppositely, when a certain period elapses after the switching between the first refrigeration cycle operation and the second refrigeration cycle operation, the amount of moisture exchanged between the adsorption heat exchanger **(51, 52)** and air decreases. Accordingly, the change (increment/decrement) in temperature of the air passing through the adsorption heat exchanger **(51, 52)** increases. When the controller **(90)** extends the time intervals of the first refrigeration cycle operation and the second refrigeration cycle operation, the time period during which the change (increment/decrement) in temperature of the air passing through the adsorption heat exchanger **(51, 52)** increases is elongated. If this occurs during the dehumidification operation, the temperature of air supplied into the room decreases. If this occurs during the humidification operation, the temperature of air supplied into the room increases.

The tenth invention is directed to the humidity control system wherein the humidity control system includes a controller **(90)** which alternately selects an alternation mode where the first refrigeration cycle operation and the second refrigeration cycle operation are alternately performed and a fixed mode where only the first refrigeration cycle operation or the second refrigeration cycle operation is performed for a predetermined time if during the dehumidification operation an actually measured value of the room temperature is lower than a selected value of the room temperature by a predetermined temperature difference or more or if during the humidification operation the actually measured value of the room temperature is higher than the selected value of the room temperature by a predetermined temperature difference or more.

In the tenth invention, the first refrigeration cycle operation and the second refrigeration cycle operation are alternately performed as in the eighth invention, such that dehumidification or humidification of air is carried out in the adsorption heat exchanger **(51, 52).**

As explained in the description of the ninth invention, in a large cooling load condition, e.g., in summer, the dehumidification operation solely cannot decrease the room temperature to the selected value in some cases. In a large heating load condition, e.g., in winter, the humidification operation solely cannot decrease the room temperature to the selected value in some cases. In such a case, the controller **(90)** of the tenth invention operates in the normal alternation mode and in the fixed mode alternately. Namely, in such a case, the alternation mode operation where the two refrigeration cycle operations are alternately switched is carried out for a certain time period, and then, the fixed mode operation where the refrigeration cycle operation is fixed without alternation is carried out for another time period, and thereafter, the alternation mode operation is resumed.

As described in the description of the ninth invention, after the lapse of a certain time since switching of the first refrigeration cycle operation and the second refrigeration cycle operation, the change (increment/decrement) in temperature of the air passing through the adsorption heat exchanger **(51, 52)** increases. This means that, during the fixed mode operation where the refrigeration cycle operation is fixed, the change (increment/decrement) in temperature of the air passing through the adsorption heat exchanger **(51, 52)** is larger than during the alternation mode operation where the two refrigeration cycle operations are switched. When the controller **(90)** of the tenth invention performs the fixed mode operation, the temperature of air supplied to the room decreases during the dehumidification operation but increases during the humidification operation because the change (increment/decrement) in temperature of the air passing through the adsorption heat exchanger **(51, 52)** is larger during the fixed mode operation.

The eleventh invention is directed to a humidity control system including an adsorption member **(51, 52,** ...) carrying an adsorbent and a heat source **(50, 100, 153)** for at least heating the adsorbent of the adsorption member **(51, 52,** ...), wherein the humidity control system controls the humidity of air which is in contact with the adsorbent of the adsorption member **(51, 52,** ...) and performs a humidification operation of supplying humidified air to a room or a dehumidification operation of supplying dehumidified air to a room. The humidity control system includes a controller **(90)** capable of performing a capacity control operation of controlling the capacity of the heat source **(50, 100, 153)** such that the temperature of the air supplied to the room equals to a target supply air temperature, and the controller **(90)** is configured to operate such that if during the dehumidification operation an actually measured value of the room temperature is lower than a selected value of the room temperature by a predetermined temperature difference or more, the controller **(90)** performs the capacity control operation with the target supply air temperature being set to a value equal to or higher than the selected value of the room temperature, and if during the humidification operation the actually measured value of the room temperature is higher than the selected value of the room temperature by a predetermined temperature difference or more, the controller (90) performs the capacity control operation with the target supply air temperature being set to a value equal to or lower than the selected value of the room temperature.

In the eleventh invention, air passing through the adsorption member **(51, 52,** ...) comes in contact with the adsorbent of the adsorption member **(51, 52,** ...). Moisture contained in the air is adsorbed by the adsorbent in the adsorption member **(51, 52,** ...), whereby the air is dehumidified. Heating the adsorbent of the adsorption member (51, **52,** ...) by the heat source **(50, 100, 153)** causes the moisture to be desorbed from the adsorbent, and the air is humidified with the desorbed moisture.

The controller **(90)** of the eleventh invention performs a capacity control operation. If during the dehumidification operation the actually measured value of the room temperature is lower than the selected value of the room temperature, the controller **(90)** carrying on the capacity control operation sets the target supply air temperature to a value equal to or higher than the selected value of the room temperature. In this case, the controller **(90)** controls the capacity of the heat source **(50, 100, 153)** such that the temperature of air supplied to the room (i.e., supply air temperature) equals to the target supply air temperature set slightly higher. Thus, the temperature of air supplied to the room during the dehumidification operation increases so that the decrease in room temperature is suppressed. If during the humidification operation the actually measured value of the room temperature is higher than the selected value of the room temperature, the controller **(90)** carrying on the performance control operation sets the target supply air temperature to a value equal to or lower than the selected value of the room temperature. In this case, the controller **(90)** controls the capacity of the heat source **(50, 100, 153)** such that the temperature of air supplied to the room (i.e., supply air temperature) equals to the target supply air temperature set slightly lower. Thus, the temperature of air supplied to the room during the humidification operation decreases so that the increase in room temperature is suppressed.

### Effects of the Invention

According to the present invention, as described above, when the actually measured temperature of the room air deviates from the selected temperature during the operation of the humidity control system **(10),** the controller **(90)** performs the operation for shifting the actually measured temperature of the room air toward the selected temperature. Thus, even when air is supplied to the room from the humidity control system **(10)** that would change not only the humidity of the air, which is intended to be modified, but also the temperature of the air, the room temperature can be maintained within an appropriate range so that the comfort of the room can be improved.

Particularly in the fifth invention, the controller **(90)** carrying on the performance control operation controls the performance of the compressor **(53)** such that the temperature of air supplied to a room is equal to a predetermined target supply air temperature. In the sixth invention, the controller **(90)** carrying on the performance control operation controls the performance of the compressor **(53)** such that during the dehumidification operation the evaporation temperature of the refrigerant equals to a predetermined target value or such that during the humidification operation the condensation temperature of the refrigerant equals to a predetermined target value. Thus, according to fifth and sixth inventions, the temperature of the air supplied from the humidity control system **(10)** to the room can be appropriately controlled. This can reduce drafty feelings of a person in the room so that the comfort of the room can be improved.

In the eighth invention, the controller **(90)** shortens the switching interval of two refrigeration cycle operations such that the actually measured temperature of the room air approaches to the selected temperature. Thus, the temperature of the air can be changed while the amount of moisture to be removed from or added to the air which is to be supplied to the room is maintained substantially constant. Therefore, according to the eighth invention, the humidity and temperature of the room can surely be maintained within appropriate ranges so that the comfort of the room can be improved.

### BRIEF DESCRIPTION OF DRAWINGS

[FIG. **1]** FIG. **1** is a piping system diagram illustrating the structure of a refrigeration circuit of embodiment 1. FIG. **1(A)** illustrates the first mode operation. FIG. **1(B)** illustrates the second mode operation.
[FIG. **2]** FIG. **2** is a general perspective view of an adsorption heat exchanger.
[FIG. **3]** FIG. **3** is a status transition chart illustrating the operation of a controller during the humidification operation according to embodiment 1.
[FIG. **4]** FIG. **4** is a status transition chart illustrating the operation of the controller during the dehumidification operation according to embodiment 1.
[FIG. **5]** FIG. **5** is a status transition chart illustrating the operation of a controller during the humidification operation according to variation 1 of embodiment 1.
[FIG. **6]** FIG. **6** is a status transition chart illustrating the operation of a controller during the humidification operation according to embodiment 2.
[FIG. **7]** FIG. **7** is a status transition chart illustrating the operation of a controller during the humidification operation according to embodiment 3.
[FIG. **8]** FIG. **8** shows a general structure of a humidity control system according to the first variation of another embodiment. **FIG. 8(A)** illustrates the first mode operation. FIG. **8(B)** illustrates the second mode operation.
[FIG. **9]** FIG. **9** is a general perspective view of a humidity control unit according to the second variation of another embodiment.

### DESCRIPTION OF NUMERALS

- 10: humidity control system
- 50: refrigerant circuit (heat source)
- 51: adsorption heat exchanger (adsorption element)
- 52: adsorption heat exchanger (adsorption element)
- 53: compressor
- 90: control means (controller)
- 100: refrigerant circuit (heat source)
- 111: first adsorption element (adsorption member)
- 112: second adsorption element (adsorption member)
- 151: first adsorption fins (adsorption member).
- 152: second adsorption fins (adsorption member).
- 153: Peltier element (heat source)

### BEST MODE FOR CARRYING OUT THE INVENTION

Embodiments of the present invention will be described below in detail with reference to the drawings.

### «Embodiment 1 of the Invention»

A first embodiment of the present invention will be described. A humidity control system **(10)** of this embodiment is configured to enable a dehumidification operation for supplying the dehumidified air to rooms and a humidification operation for supplying the humidified air to rooms.

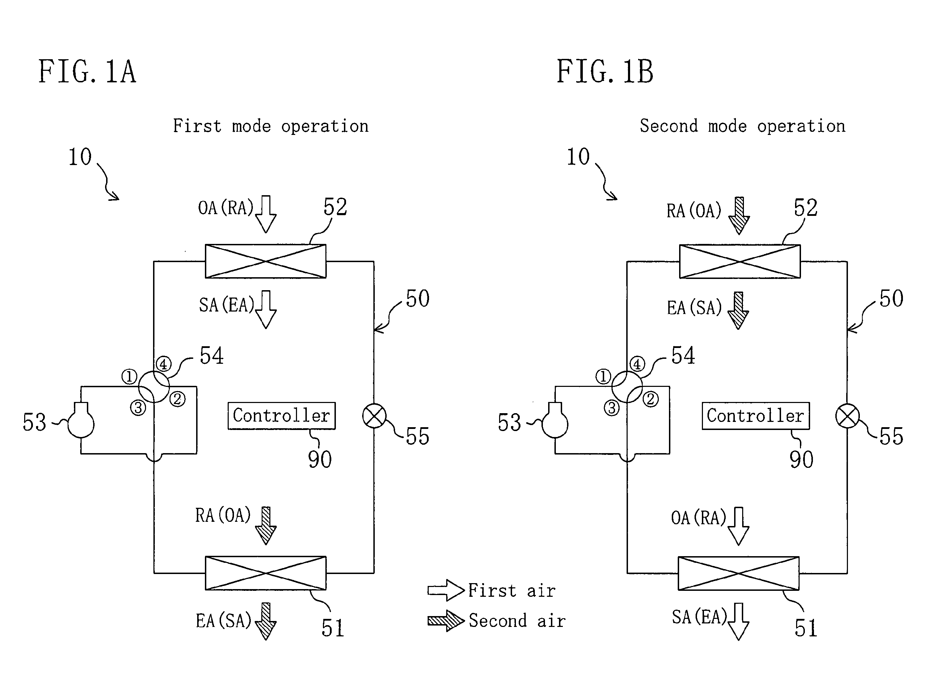

The humidity control system **(10)** includes a refrigerant circuit **(50).** As illustrated in FIG. 1, the refrigerant circuit **(50)** is a closed circuit provided with a first adsorption heat exchanger **(51),** a second adsorption heat exchanger **(52),** a compressor **(53),** a four-way selector valve **(54),** and a motor-operated expansion valve **(55).** The refrigerant circuit **(50)** runs a vapor compression refrigeration cycle by circulating refrigerant filling the refrigerant circuit **(10).** The refrigerant circuit **(50)** constitutes a heat source.

In the refrigerant circuit **(50),** the compressor **(53)** is connected at its discharge side to the first port of the four-way selector valve **(54)** and connected at its suction side to the second port of the first four-way selector valve **(54).** The first adsorption heat exchanger **(51)** is connected at one end to the third port of the four-way selector valve **(54)** and connected at the other end via the motor-operated expansion valve **(55)** to one end of the second adsorption heat exchanger **(52).** The second adsorption heat exchanger **(52)** is connected at the other end to the fourth port of the four-way selector valve **(54).**

The four-way selector valve **(54)** is switchable between a first position in which the first and third ports communicate with each other and the second and fourth ports communicate with each other (the position shown in FIG. **1(A)****)** and a second position in which the first and fourth ports communicate with each other and the second and third ports communicate with each other (the position shown in FIG. **1(B)**).

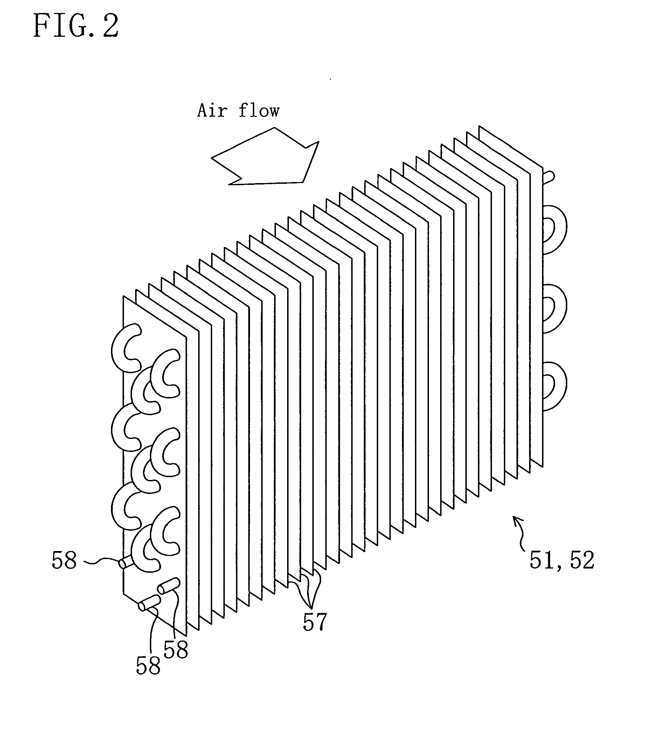

As illustrated in FIG. **2****,** each of the first and second adsorption heat exchangers **(51)** and **(52)** is formed by a so-called cross fin type fin-and-tube heat exchanger. Specifically, each of the adsorption heat exchangers **(51, 52)** includes heat exchanger tubes (58) made of copper and a large number of fins **(57)** made of aluminum. The fins **(57)** provided for the adsorption heat exchangers **(51, 52)** each form the shape of a rectangular plate and are aligned with regular intervals. The heat exchanger tubes **(58)** penetrate through the fins **(57).**

Each adsorption heat exchanger **(51, 52)** has an adsorbent carried on the surfaces of the fins **(57)** and allows the air passing between the fins **(57)** to come into contact with the adsorbent on the surfaces of the fins **(57).** A material that can adsorb water vapor in the air, such as zeolite, silica gel, activated carbon, or organic polymeric material having a hydrophilic functional group, is used as the adsorbent. The adsorption heat exchangers **(51, 52)** constitute adsorption elements.

The humidity control system **(10)** includes a controller **(90)** as a control means and, although not shown, is provided with an inside air temperature sensor for measuring the temperature of room air taken in from rooms by the humidity control system **(10),** an inside air humidity sensor for measuring the humidity thereof, and a supply air temperature sensor for measuring the temperature of air which is to be supplied to rooms by the humidity control system **(10).**

Input to the controller **(90)** are an output value of the inside air temperature sensor (i.e., a measured value of the room temperature), an output value of the inside air humidity sensor (i.e., a measured value of the room humidity), and an output value of the supply air temperature sensor (i.e., a measured value of the supply air temperature). The controller **(90)** controls the operational frequency of the compressor **(53)** using the selected room temperature and humidity and respective output values of the inside air temperature sensor, the inside air humidity sensor and the supply air temperature sensor. With a change in the operational frequency of the compressor **(53),** the performance of the compressor **(53)** varies. In other words, with a change in the rotational speed of a motor provided for the compressor **(53),** the flow rate of refrigerant discharged by the compressor **(53)** (i.e., the flow rate of refrigerant circulated in the refrigerant circuit **(50))** varies.

### - Operational Behavior-

The humidity control system **(10)** of this embodiment performs a dehumidification operation and a humidification operation. During the dehumidification operation or during the humidification operation, the humidity control system **(10)** controls the humidity of outdoor air (OA) taken in the system and then supplies the humidity-controlled air as supply air (SA) to a room while discharging room air (RA) taken in the system as exhaust air (EA) out of the room. In other words, during the dehumidification operation or during the humidification operation, the humidity control system **(10)** provides room ventilation. During each of dehumidification and humidification operations, the humidity control system **(10)** alternately repeats the first operation mode and the second operation mode at predetermined time intervals (for example, at intervals of three minutes).

During dehumidification operation, the humidity control system **(10)** takes in outdoor air (OA) as the first air and room air (RA) as the second air. During humidification operation, the humidity control system **(10)** takes in room air (RA) as the first air and outdoor air (OA) as the second air.

First, a description is given of the first operation mode. In the first operation mode, the second air is sent into the first adsorption heat exchanger **(51)** and the first air is sent into the second adsorption heat exchanger **(52).** In the first operation mode, a regeneration action for the first adsorption heat exchanger **(51)** and an adsorption action for the second adsorption heat exchanger **(52)** are carried out.

As shown in FIG. **1(A)**, in the refrigerant circuit **(50)** in the first operation mode, the four-way selector valve (54) is set to the first position so that the operation of the first refrigeration cycle is carried out. When the compressor **(53)** is driven, the refrigerant circuit **(50)** circulates refrigerant therethrough. Specifically, refrigerant discharged from the compressor **(53)** releases heat in the first adsorption heat exchanger **(51)** to become condensed. The refrigerant condensed in the first adsorption heat exchanger **(51)** is reduced in pressure during passage through the motor-operated expansion valve **(55)** and then takes heat in the second adsorption heat exchanger **(52)** to become evaporated. The refrigerant evaporated in the second adsorption heat exchanger **(52)** is sucked into the compressor **(53),** compressed therein and discharged again from the compressor **(53).**

Thus, in the refrigerant circuit **(50)** in the first operation mode, the first adsorption heat exchanger **(51)** functions as a condenser and the second adsorption heat exchanger **(52)** functions as an evaporator. In the first adsorption heat exchanger **(51),** the adsorbent on the surfaces of the fins **(57)** are heated by the refrigerant in the heat exchange tubes **(58)** and moisture desorbed from the heated adsorbent is applied to the second air. On the other hand, in the second adsorption heat exchanger **(52),** moisture in the first air is adsorbed on the adsorbent on the surfaces of the fins **(57)** and heat of adsorption thus produced is taken by the refrigerant in the heat exchange tubes **(58).**

Further, during dehumidification operation, the first air dehumidified by the second adsorption heat exchanger **(52)** is supplied to the room and moisture desorbed from the first adsorption heat exchanger **(51)** is discharged to the outside atmosphere together with the second air. On the other hand, during humidification operation, the second air humidified by the first adsorption heat exchanger **(51)** is supplied to the room and the first air which has been deprived of moisture by the second adsorption heat exchanger **(52)** is discharged to the outside atmosphere.

Next, a description is given of the second operation mode. In the second operation mode, the first air is sent into the first adsorption heat exchanger **(51)** and the second air is sent into the second adsorption heat exchanger **(12).** In the second operation mode, a regeneration action for the second adsorption heat exchanger **(52)** and an adsorption action for the first adsorption heat exchanger **(51)** are carried out.

As shown in FIG. **1(B)****,** in the refrigerant circuit **(50)** in the second operation mode, the four-way selector valve **(54)** is set to the second position so that the operation of the second refrigeration cycle is carried out. When the compressor **(53)** is driven, the refrigerant circuit **(50)** circulates refrigerant therethrough. Specifically, refrigerant discharged from the compressor **(53)** releases heat in the second adsorption heat exchanger **(52)** to become condensed. The refrigerant condensed in the second adsorption heat exchanger **(52)** is reduced in pressure during passage through the motor-operated expansion valve **(55)** and then takes heat in the first adsorption heat exchanger **(51)** to become evaporated. The refrigerant evaporated in the first adsorption heat exchanger **(51)** is sucked into the compressor **(53),** compressed therein and discharged again from the compressor **(53).**

Thus, in the refrigerant circuit **(50),** the second adsorption heat exchanger **(52)** functions as a condenser and the first adsorption heat exchanger **(51)** functions as an evaporator. In the second adsorption heat exchanger **(52),** the adsorbent on the surfaces of the fins **(57)** is heated by the refrigerant in the heat exchange tubes **(58)** and moisture desorbed from the heated adsorbent is applied to the second air. In the first adsorption heat exchanger **(51),** moisture in the first air is adsorbed on the adsorbent on the surfaces of the fins **(57)** and heat of adsorption thus produced is taken by the refrigerant in the heat exchange **tubes (58).**

Further, during dehumidification operation, the first air dehumidified by the first adsorption heat exchanger **(51)** is supplied to the room and moisture desorbed from the second adsorption heat exchanger **(52)** is discharged to the outside atmosphere together with the second air. On the other hand, during humidification operation, the second air humidified by the second adsorption heat exchanger **(52)** is supplied to the room and the first air which has been deprived of moisture by the first adsorption heat exchanger **(51)** is discharged to the outside atmosphere.

### - Operation of Controller -

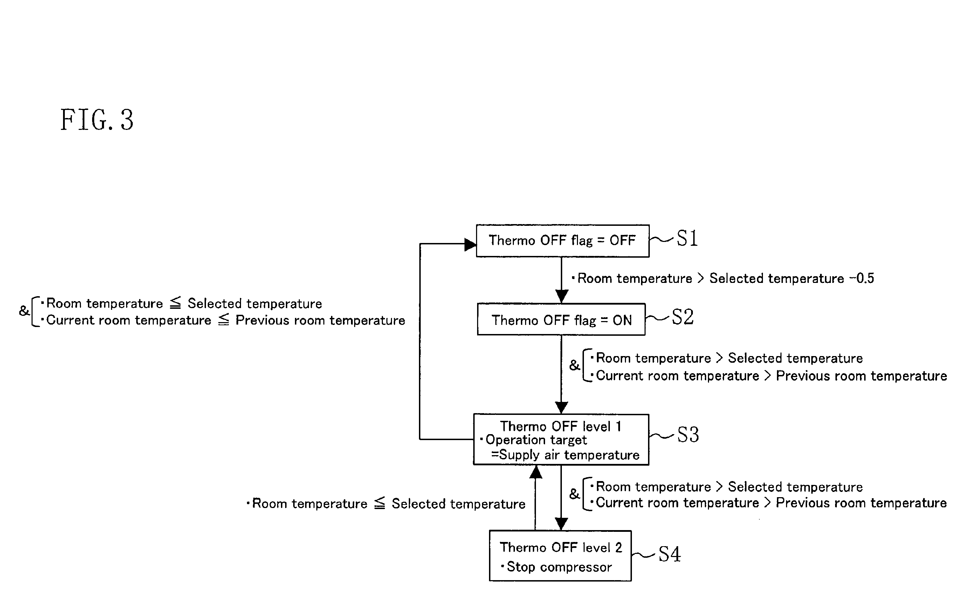

First, a description is given of the operation of the controller **(90)** during humidification operation with reference to the status transition chart shown in FIG. 3.

In a case where an actually measured value of the room temperature is lower than the selected value thereof or in a case where the measured value of the room temperature is substantially equal to the selected value, the controller **(90)** maintains status S1. In status S1, the controller **(90)** adjusts the operational frequency of the compressor **(53)** such that actually measured value Rr of the room humidity is equal to selected value Rs thereof. Furthermore, in status S1, the controller **(90)** compares actually measured value Tr of the room temperature with selected value Ts thereof. If the relationship of Tr>Ts-0.5 is satisfied, the operating status of the controller **(90)** proceeds to status S2. In other words, if actually measured value Tr of the room temperature approaches selected value Ts to some extent, the operating status of the controller **(90)** proceeds to status S2.

In status S2, the controller **(90)** monitors the actually measured value of the room temperature, for example, once every several minutes. In this case, the controller **(90)** stores the value of the room temperature which has been actually measured at the previous measurement as previous room temperature Tr' and compares actually measured value Tr of the current room temperature with selected value Ts of the room temperature and previous room temperature Tr'. If the relationships of Tr>Ts and Tr>Tr' are both satisfied, the operating status of the controller **(90)** proceeds to status S3. In other words, if actually measured value Tr of the room temperature is above selected value Ts and increasing, the operating status of the controller **(90)** proceeds to status S3.

In status S3, the controller **(90)** changes the parameter considered for controlling the performance of the compressor **(53)** from the room humidity to the supply air temperature and starts the action of controlling the performance of the compressor **(53)** such that the actually measured value of the supply air temperature becomes equal to a target supply air temperature. In this process, the controller **(90)** sets the target supply air temperature to a selected value of the room temperature. After the start of such a performance control action for the compressor **(53),** the controller **(90)** monitors the actually measured value of the room temperature, for example, once every several minutes. In this process, the controller **(90)** stores the value of the room temperature actually measured at the previous measurement as previous room temperature Tr' and compares actually measured value Tr of the current room temperature with selected value Ts of the room temperature and previous room temperature Tr'.

In status S3, if the relationships of Tr>Ts and Tr>Tr' are both satisfied, the operating status of the controller **(90)** proceeds to status S4. In other words, if actually measured value Tr of the room temperature is above selected value Ts and increasing, the operating status of the controller **(90)** proceeds to status S4. On the other hand, if the relationships of Tr≤Ts and Tr≤Tr' are both satisfied, the operating status of the controller **(90)** returns to status S1. More particularly, if actually measured value Tr of the room temperature is equal to or smaller than selected value Ts and is constant or decreasing, the controller **(90)** resumes controlling the performance of the compressor **(53)** with the room humidity considered as the parameter. Otherwise, the controller **(90)** maintains status S3.

In status S4, the controller **(90)** stops the compressor **(53).** Namely, if even controlling the performance of the compressor **(53)** with the supply air temperature considered as the parameter fails to shift the actually measured value of the room temperature toward the selected value thereof, the controller **(90)** necessarily stops the compressor **(53).**

Even where the compressor **(53)** is stopped while the controller **(90)** is in status S4, the humidity control system **(10)** continuously changes the distribution route of air. More particularly, the humidity control system **(10)** alternately repeats an operation cycle in which outdoor air taken in is led through the second adsorption heat exchanger **(52)** and then supplied to a room while room air taken in is led through the first adsorption heat exchanger **(51)** and then discharged to the outside atmosphere and another operation cycle in which outdoor air taken in is led through the first adsorption heat exchanger **(51)** and then supplied to the room while room air taken in is led through the second adsorption heat exchanger **(52)** and then discharged to the outside atmosphere.

In status S4, the controller **(90)** compares actually measured value Tr of the room temperature with selected value Ts thereof, for example, once every several minutes. If the relationship of Tr≤Ts is satisfied, the operating status of the controller **(90)** returns to status S3. More particularly, if actually measured value Tr of the room temperature is equal to or smaller than selected value Ts, the operating status of the controller **(90)** returns to status S3 so that the controller **(90)** activates the compressor **(53)** and resumes controlling the performance of the compressor **(53)** with the supply air temperature considered as the parameter.

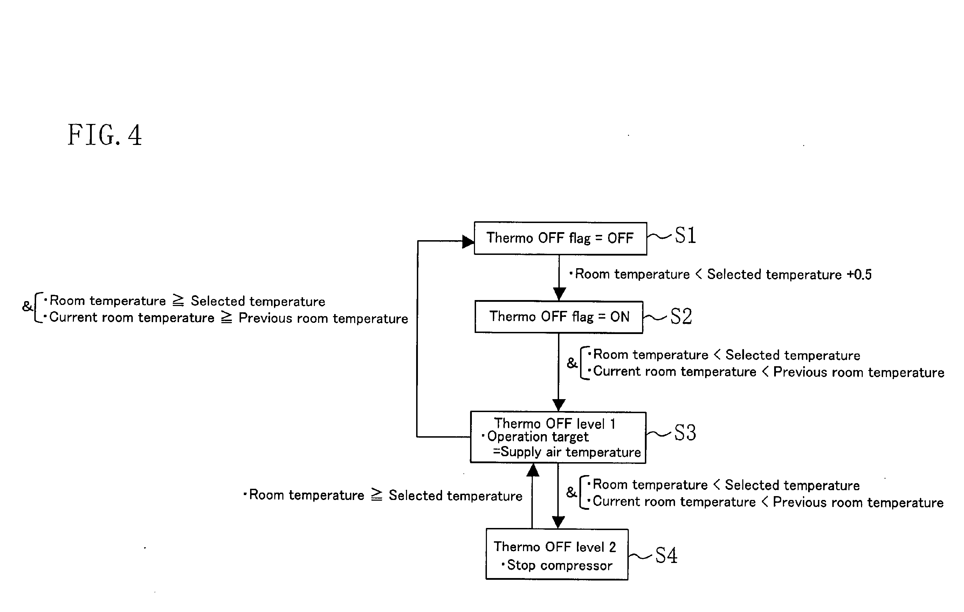

Next, a description is given of the operation of the controller **(90)** during a dehumidification operation with reference to the status transition chart shown in FIG. 4.

During a dehumidification operation, the operations of the controller **(90)** in statuses S1, S2, S3, and S4 are identical with the operations of the controller **(90)** during a humidification operation in statuses S1, S2, S3, and S4, respectively. The conditions for shifting the operating status of the controller **(90)** among statuses S1 to S4 during a dehumidification operation are different from those applied during the humidification operation. A description is given herein of the conditions for shifting the operating status of the controller **(90)** during a dehumidification operation.

In status S1, the controller **(90)** compares actually measured value Tr of the room temperature with selected value Ts of the room temperature. If the relationship of Tr<Ts+0.5 is satisfied, the operating status of the controller **(90)** proceeds to status S2. In other words, if actually measured value Tr of the room temperature approaches selected value Ts to some extent, the operating status of the controller **(90)** proceeds to status S2.

In status S2, the controller **(90)** compares actually measured value Tr of the current room temperature with selected value Ts of the room temperature and previous room temperature Tr'. If the relationships of Tr<Ts and Tr<Tr' are both satisfied, the operating status of the controller **(90)** proceeds to status S3. In other words, if actually measured value Tr of the room temperature is below selected value Ts and decreasing, the operating status of the controller **(90)** proceeds to status S3.

In status S3, the controller **(90)** compares actually measured value Tr of the current room temperature with selected value Ts of the room temperature and previous room temperature Tr'. If the relationships of Tr<Ts and Tr<Tr' are both satisfied, the operating status of the controller **(90)** proceeds to status S4. In other words, if actually measured value Tr of the room temperature is below selected value Ts and decreasing, the operating status of the controller **(90)** proceeds to status S4. On the other hand, if the relationships of Tr≥Ts and Tr≥Tr' are both satisfied, the operating status of the controller **(90)** returns to status S1. More particularly, if actually measured value Tr of the room temperature is equal to or larger than selected value Ts and is constant or increasing, the controller **(90)** resumes controlling the performance of the compressor **(53)** with the room humidity considered as the parameter. Otherwise, the controller **(90)** maintains status S3.

In status S4, the controller **(90)** compares actually measured value Tr of the room temperature to selected value Ts thereof. If the relationship of Tr≥Ts is satisfied, the operating status of the controller **(90)** returns to status S3. More particularly, if actually measured value Tr of the room temperature is equal to or larger than selected value Ts, the operating status of the controller **(90)** returns to status S3 so that the controller **(90)** activates the compressor **(53).**

### -Effect of Embodiment 1-

In this embodiment, as described above, when during the operation of the humidity control system **(10)** the actually measured temperature of the room air is different from the selected temperature thereof, the controller **(90)** carries out an operation for shifting the actually measured temperature of the room air toward the selected temperature. Thus, even when air is supplied to a room via the humidity control system (10) that could change not only the air humidity to be controlled but also the air temperature, the room temperature can be kept within an appropriate temperature range so that the comfort of the room can be improved.

Furthermore, the controller **(90)** of this embodiment can operate to control the performance of the compressor **(53)** such that the temperature at which air is supplied to a room is equal to a predetermined target supply air temperature. Thus, according to this embodiment, the temperature of the air supplied through the humidity control system **(10)** to a room can be appropriately controlled. This can reduce drafty feelings of a person in the room so that the comfort of the room can be improved.

### -Modification 1 of Embodiment 1-

In this embodiment, the controller **(90)** may operate in the following manner.

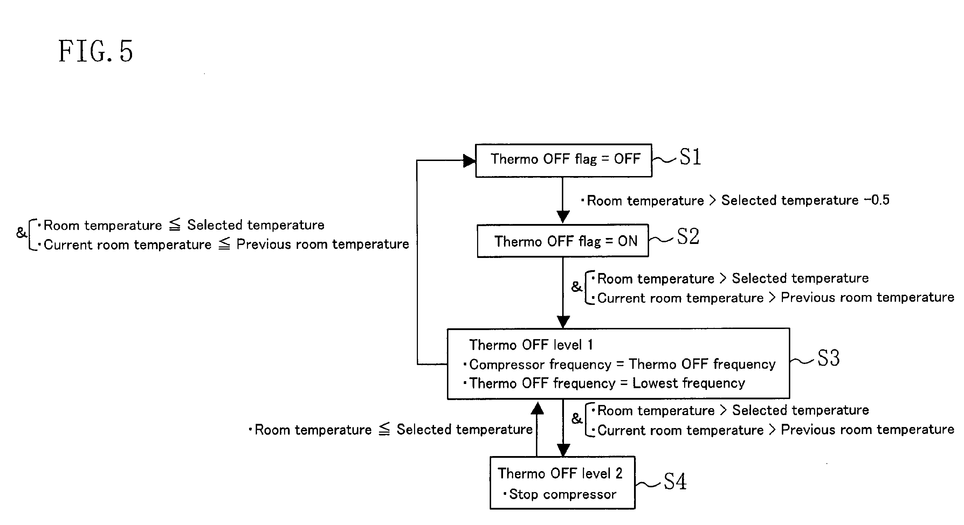

As shown in the status transition chart in FIG. **5****,** the operation of the controller (90) in status S3 during a humidification operation is different from that carried out in the first embodiment. The operation of the controller **(90)** in the other statuses and the conditions for shifting the operating status of the controller **(90)** among the other statuses are the same as those employed in the first embodiment.

In status S3, the controller **(90)** fixes the operational frequency of the compressor **(53)** at the lower limit of its control range. More particularly, the controller **(90)** instructs the compressor **(53)** to operate with the lowest performance. The operation of the compressor **(53)** with the lowest performance reduces the amount of refrigerant circulated in the refrigerant circuit **(50),** thereby reducing the amount of heat released from refrigerant in the adsorption heat exchanger **(51, 52)** functioning as a condenser and hence decreasing the temperature of air passing through the adsorption heat exchanger **(51, 52).** Meanwhile, the amount of heat taken by refrigerant in the adsorption heat exchanger **(51, 52)** functioning as an evaporator is reduced, whereby the temperature of air passing through the adsorption heat exchanger **(51, 52)** is increased.

### -Modification 2 of Embodiment 1-

In this embodiment, the controller **(90)** may operate in the following manner.

The operation of the controller **(90)** in status S3 during a humidification operation is different from that carried out in the first embodiment. The operation of the controller **(90)** in the other statuses and the conditions for shifting the operating status of the controller **(90)** among the other statuses are the same as those employed in the first embodiment.

In status S3, the controller **(90)** forcibly decreases the selected value of the room humidity and controls the performance of the compressor **(53)** such that the actually measured value of the room humidity becomes equal to the reduced selected value. If the selected value of the room humidity is reduced, the operational frequency of the compressor **(53)** is set relatively low even under the same operating conditions of the compressor **(53).** Accordingly, the amount of refrigerant circulated in the refrigerant circuit **(50)** decreases, whereby the amount of heat released from refrigerant in the adsorption heat exchanger **(51, 52)** functioning as a condenser is decreased, and hence, the temperature of air passing through the adsorption heat exchanger **(51, 52)** is also decreased. Simultaneously, the amount of heat taken by refrigerant in the adsorption heat exchanger **(51, 52)** functioning as an evaporator is reduced, whereby the temperature of an air passing through the adsorption heat exchanger **(51, 52)** is increased.

### -Modification 3 of Embodiment 1-

In this embodiment, the controller **(90)** may operate in the following manner.

The operation of the controller **(90)** in status S3 during a humidification operation is different from that carried out in the first embodiment. In the operation of the controller **(90)** in this modification, the operation thereof in status S4 is omitted. The operation of the controller **(90)** in the other statuses and the conditions for shifting the operating status of the controller **(90)** among the other statuses are the same as those employed in the first embodiment. This controller **(90)** in status S3 stops the compressor (53).

### «Embodiment 2 of the Invention»

A description is given of the second embodiment of the present invention. The description is focused on the differences of a humidity control system **(10)** of this embodiment from the first embodiment.

In the humidity control system **(10)** of this embodiment, a high-pressure sensor and a low-pressure sensor are connected to a refrigerant circuit **(50).** The high-pressure sensor is placed at the discharge side of a compressor **(53)** for measuring the high-side pressure of a refrigeration cycle. The low-pressure sensor is placed at the suction side of the compressor **(53)** for measuring the low-side pressure of the refrigeration cycle. Input to a controller **(90)** are the respective output values of the high-pressure sensor and the low-pressure sensor.

In the humidity control system **(10)** of this embodiment, the operation of the controller **(90)** is different from that carried out in the first embodiment. A description is given here of the operation of the controller **(90)** of this embodiment.

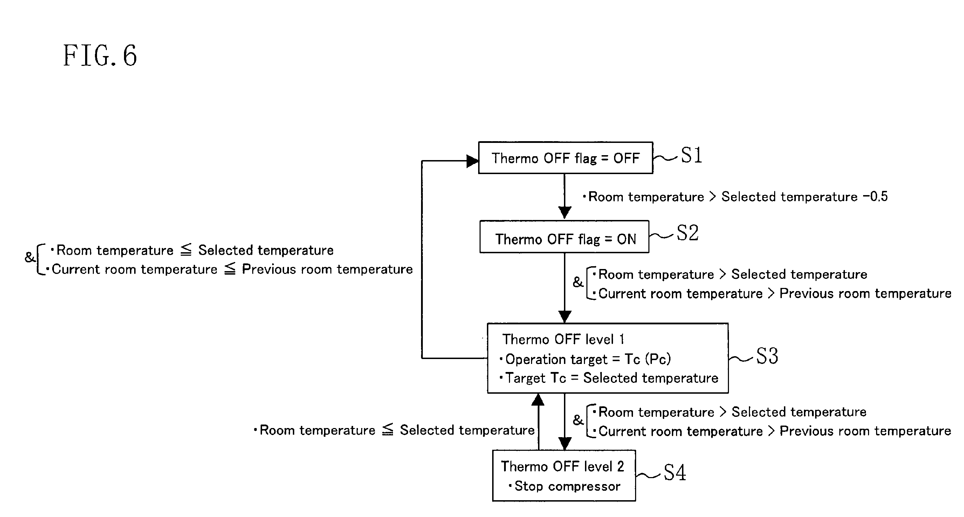

As shown in the status transition chart in FIG. **6****,** the operation of the controller **(90)** in status S3 during a humidification operation is different from that carried out in the first embodiment. The operation of the controller **(90)** in the other statuses and the conditions for shifting the operating status of the controller **(90)** among the other statuses are the same as those employed in the first embodiment.

In status S3, the controller **(90)** changes the parameter considered in controlling the performance of the compressor **(53)** from the room humidity to the refrigerant condensation temperature and starts the action of controlling the performance of the compressor **(53)** such that refrigerant condensation temperature Tc becomes equal to selected value Ts of the room temperature. More specifically, the controller **(90)** during this action calculates the refrigerant pressure when the refrigerant condensation temperature is equal to selected value Ts of the room temperature and employs the calculated value as a target pressure. Then, the controller **(90)** adjusts the performance of the compressor **(53)** such that actually measured value Pc of the refrigerant condensation pressure becomes equal to the target pressure.

On the other hand, in status S3 of the controller **(90)** during a refrigeration operation, the controller **(90)** changes the parameter considered in controlling the performance of the compressor **(53)** from the room humidity to the refrigerant evaporation temperature and starts the action of controlling the performance of the compressor **(53)** such that refrigerant evaporation temperature Te becomes equal to selected value Ts of the room temperature. More specifically, the controller **(90)** during this action calculates the refrigerant pressure when the refrigerant evaporation temperature is equal to selected value Ts of the room temperature and employs the calculated value as a target pressure value. Then, the controller **(90)** adjusts the performance of the compressor **(53)** such that actually measured value Pe of the refrigerant evaporation pressure becomes equal to the target pressure.

### «Embodiment 3 of the Invention»

A description is given of the third embodiment of the present invention. In this embodiment, the operation of the controller **(90)** is different from that of the first embodiment. Here, the operation of the controller **(90)** of this embodiment is described in terms of differences from the first embodiment.

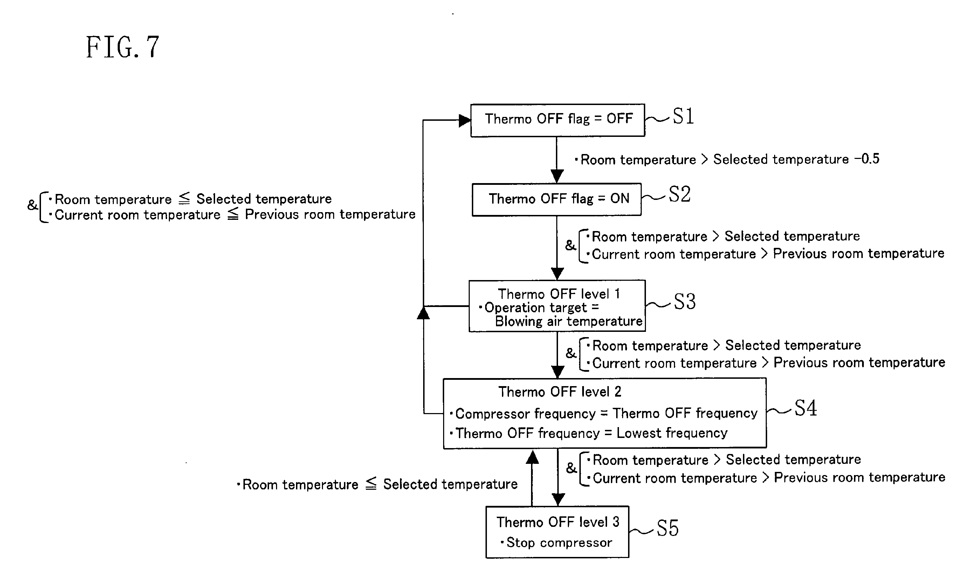

As shown in the status transition diagram in FIG. 7, in the controller **(90)** of this embodiment, status S4 is the additional status. Statuses S1, S2, S3, and S5 in FIG. **7** are identical with statuses S1, S2, S3, and S4 in FIG. **3****,** respectively.

If in status S3 the relationships of Tr>Ts and Tr>Tr' are both satisfied, the operating status of the controller **(90)** proceeds to status S4. More particularly, even controlling the performance of the compressor **(53)** with the supply air temperature considered as the parameter, if actually measured value Tr of the room temperature is still above selected value Ts thereof and is constant or increasing, the operating status of the controller **(90)** proceeds to status S4.

In status S4, the controller **(90)** fixes the operational frequency of the compressor **(53)** at the lower limit of its control range. More particularly, the controller **(90)** operates the compressor **(53)** with the lowest performance. After the operational frequency of the compressor **(53)** is fixed at the lower limit, the controller (90) monitors the actually measured value of the room temperature, for example, once every several minutes. In this case, the controller **(90)** stores the value of the room temperature actually measured at the previous measurement as previous room temperature Tr' and compares actually measured value Tr of the current room temperature with selected value Ts of the room temperature and previous room temperature Tr'.

In status S4, if the relationships of Tr>Ts and Tr>Tr' are both satisfied, the operating status of the controller **(90)** proceeds to status S5. In other words, if actually measured value Tr of the room temperature is above selected value Ts and increasing, the operating status of the controller **(90)** proceeds to status S5. On the other hand, if the relationships of Tr≤Ts and Tr≤Tr' are both satisfied, the operating status of the controller **(90)** returns to status S1. More particularly, if actually measured value Tr of the room temperature is equal to or smaller than selected value Ts and is constant or decreasing, the controller **(90)** resumes controlling the performance of the compressor **(53).** Otherwise, the controller **(90)** maintains status S4.

### «Embodiment 4 of the Invention»

A description is given of the fourth embodiment of the present invention. In this embodiment, the operation of the controller **(90)** is different from that of the first embodiment. Here, the operation of the controller **(90)** of this embodiment is described in terms of differences from the first embodiment.

The operation of the controller **(90)** of this embodiment in status S3 is different from that of the first embodiment. The other operations of the controller **(90)** are the same as those of the first embodiment. In status S3, the controller **(90)** shortens the time intervals at which the operation is switched between the first operation mode and the second operation mode. For example, the controller **(90)** shortens the switching interval of three minutes to two minutes. In this example, in the refrigerant circuit (50), the switching interval of the first refrigeration cycle operation and the second refrigeration cycle operation decreases from three minutes to two minutes.

Immediately after switching between the first refrigeration cycle operation and the second refrigeration cycle operation, a relatively large amount of moisture is exchanged between the adsorption heat exchanger **(51, 52)** and air passing therethrough. The adsorption heat produced when moisture is adsorbed on the adsorption heat exchanger **(51, 52)** increases with an increase in the amount of the adsorbed moisture. In the adsorption heat exchanger **(51, 52)** functioning as an evaporator, the decrement of the temperature of the first air is reduced depending on the increment of the adsorption heat adsorbed by the refrigerant. Furthermore, the amount of heat required for desorbing moisture from the adsorption heat exchanger **(51, 52)** increases with an increase in the amount of moisture to be desorbed. In the adsorption heat exchanger **(51, 52)** functioning as a condenser, the increment of temperature of the second air is reduced depending on the increment of amount of heat required for desorbing moisture from the adsorbent.

Thus, when the controller **(90)** shortens the time intervals of the first refrigeration cycle operation and the second refrigeration cycle operation, the change (increment/decrement) in temperature of the air passing through the adsorption heat exchanger **(51, 52)** continues to be small. During a dehumidification operation, the temperature of air supplied into the room increases. Meanwhile, during a humidification operation, the temperature of air supplied into the room decreases. As a result, the actually measured value of the room temperature becomes closer to the selected value.

### -Effect of Embodiment 4-

In this embodiment, the controller (90) shortens the switching intervals of two refrigeration cycle operations, thereby shifting the actually measured value of the room temperature toward the selected value of the room temperature. Therefore, the temperature of this air can be varied while the amount of dehumidification or humidification of the air to be supplied to a room is kept generally constant. Thus, according to this embodiment, the room humidity and temperature fall within appropriate ranges with reliability, resulting in further improvement in the comfort of the room.

### «Embodiment 5 of the Invention»

A description is given of the fifth embodiment of the present invention. In this embodiment, the operation of the controller (90) is different from that of the first embodiment. Here, the operation of the controller (90) of this embodiment is described.

During the operation of the humidity control system (10), the controller (90) compares the actually measured value of the room temperature to a selected value of the room temperature, for example, once every several minutes. In the case where during dehumidification operation the actually measured value of the room temperature is above the selected value or in the case where during humidification operation the actually measured value of the room temperature is below the selected value, the time intervals at which the operation is switched between the first operation mode and the second operation mode are extended. For example, the controller (90) extends the switching intervals of three minutes to four minutes. In this example, in the refrigerant circuit (50), the time interval of the first refrigeration cycle operation and the second refrigeration cycle operation is extended from three minutes to four minutes.

As described in the fourth embodiment, the amount of moisture exchanged between the adsorption heat exchanger (51, 52) and air increases immediately after the switching of the first refrigeration cycle operation and the second refrigeration cycle operation. Accordingly, the change (increment/decrement) in temperature of the air passing through the adsorption heat exchanger **(51, 52)** decreases. Oppositely, when a certain period elapses after the switching between the first refrigeration cycle operation and the second refrigeration cycle operation, the amount of moisture exchanged between the adsorption heat exchanger **(51, 52)** and air decreases. Accordingly, the change (increment/decrement) in temperature of the air passing through the adsorption heat exchanger **(51, 52)** increases. When the controller **(90)** extends the time intervals of the first refrigeration cycle operation and the second refrigeration cycle operation, the time period during which the change (increment/decrement) in temperature of the air passing through the adsorption heat exchanger **(51, 52)** increases is elongated. If this occurs during the dehumidification operation, the temperature of air supplied into the room decreases. If this occurs during the humidification operation, the temperature of air supplied into the room increases. As a result, the actually measured value of the room temperature becomes closer to the selected value of the room temperature.

In the above-described example, in determination as to whether or not the switching intervals of the refrigeration cycle operations are changed, only the difference between the actually measured value of the room temperature at a certain point in time and the selected value of the room temperature is considered. However, both the difference between the actually measured value of the room temperature at a certain point in time and the selected value of the room temperature and the trend of change ("increasing" or "decreasing") in the actually measured value of the room temperature may be considered. In this case, when during dehumidification operation the actually measured value of the room temperature is above the selected value of the room temperature and is increasing, the controller **(90)** extends the time intervals at which the operation is switched between the first operation mode and the second operation mode. When during humidification operation the actually measured value of the room temperature is below the selected value of the room temperature and is decreasing, the controller (90) extends the time intervals at which the operation is switched between the first operation mode and the second operation mode.

### -Modification of Embodiment 5-

In this embodiment, an alternation mode operation and a fixed mode operation may be alternately carried out instead of extending the switching interval of the refrigeration cycle operations.

In the case where during dehumidification operation the actually measured value of the room temperature is above the selected value of the room temperature or in the case where during humidification operation the actually measured value of the room temperature is below the selected value of the room temperature, the controller **(90)** of this modification operates alternately in an alternation mode and a fixed mode. The humidity control system (10) in the alternation mode alternately repeats a first mode operation and a second mode operation at constant time intervals. When switching between the first mode operation and the second mode operation is performed a predetermined number of times (e.g., five times), the fixed mode is selected such that the switching between the first mode operation and the second mode operation is prohibited. In other words, in the refrigerant circuit **(50)** in the fixed mode, the operation in any one of the first refrigeration cycle operation and the second refrigeration cycle operation is carried out for a predetermined period (e.g., three minutes).

As described above, when a certain period elapses after the switching between the first refrigeration cycle operation and the second refrigeration cycle operation, the change (increment/decrement) in temperature of the air passing through the adsorption heat exchanger **(51, 52)** increases. This means that, in the fixed mode where the operation is fixed to any refrigeration cycle operation, the change (increment/decrement) in temperature of the air passing through the adsorption heat exchanger **(51, 52)** is larger than in the alternation mode where two refrigeration cycle operations are switched. Since in the fixed mode the change (increment/decrement) in temperature of the air passing through the adsorption heat exchanger **(51, 52)** is larger, the average value of the temperature of the air supplied into the room decreases during dehumidification operation while it increases during humidification operation. As a result, the actually measured value of the room temperature becomes closer to the selected value of the room temperature.

### «Other Embodiments»

In the above-described embodiments, the humidity control system **(10)** may be configured as follows. Here, modifications of the humidity control system **(10)** are described.

### -Modification 1-

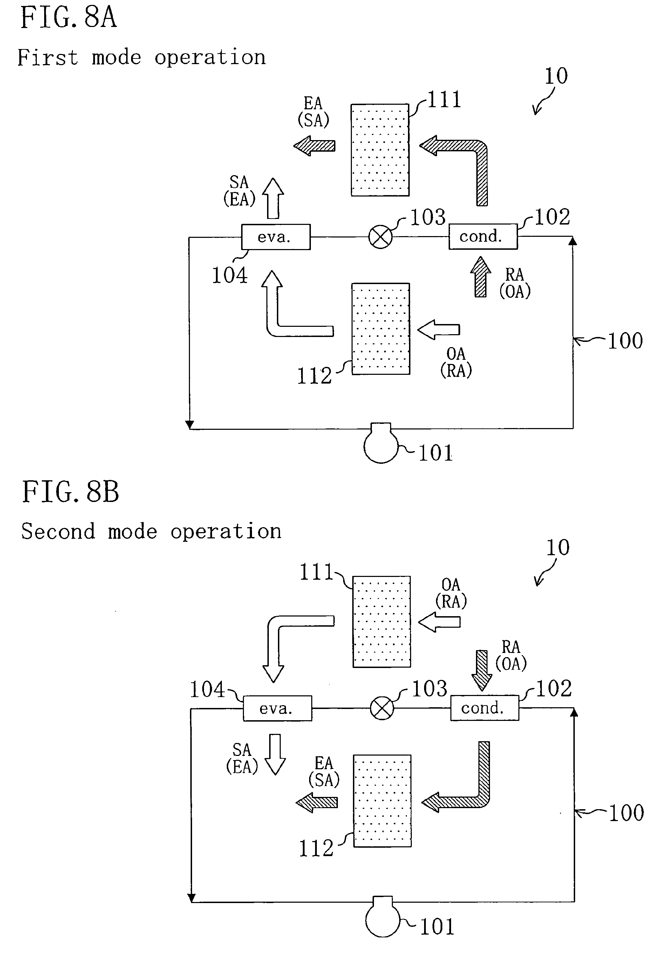

As shown in FIG. **8**, a humidity control system **(10)** of the first modification includes a refrigerant circuit **(100)** and two adsorption elements **(111, 112).** The refrigerant circuit **(100)** is a closed circuit in which a compressor **(101),** a condenser (102), an expansion valve **(103),** and an evaporator **(104)** are connected in this order. The refrigerant circuit **(100)** runs a vapor compression refrigeration cycle by circulating refrigerant in the refrigerant circuit **(100).** The refrigerant circuit **(100)** constitutes a heat source. The first adsorption element **(111)** and second adsorption element **(112)** each include an adsorbent, such as zeolite, and constitute an adsorption member. Each of the adsorption element **(111, 112)** has many air passages. When air passes through these air passages, the air comes into contact with the adsorbent.

This humidity control system **(10)** repeats the first operation mode and the second operation mode. As shown in FIG. **8(A)****,** the humidity control system **(10)** in the first operation mode supplies the air heated by the condenser **(102)** to the first adsorption element **(111)** to regenerate the adsorbent while cooling in the evaporator **(104)** the air from which moisture has been removed by the second adsorption element **(112).** As shown in FIG. **8(B)****,** the humidity control system **(10)** in the second operation mode supplies the air heated by the condenser **(102)** to the second adsorption element **(112)** to regenerate the adsorbent while cooling in the evaporator **(104)** the air from which moisture has been removed by the first adsorption element **(111).** This humidity control system **(10)** alternately performs the dehumidification operation of supplying air dehumidified by the passage of the air through the adsorption element **(111, 112)** to the room and the humidification operation of supplying air humidified by the passage of the air through the adsorption element **(111, 112)** to the room.

### -Modification 2-

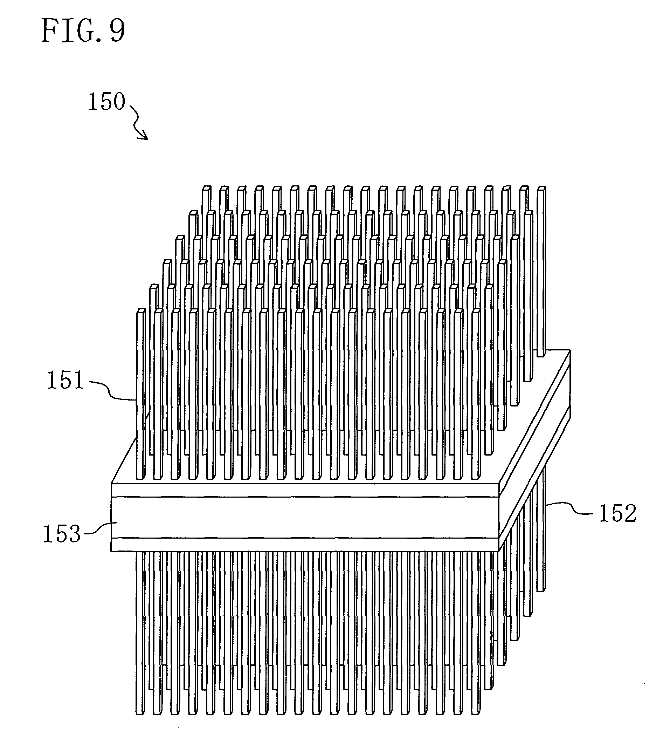

As shown in FIG. **9****,** a humidity control system (10) of the second modification includes a humidity control unit **(150).** This humidity control unit **(150)** includes a Peltier element **(153)** and a pair of adsorption fins **(151, 152).** Each of the adsorption fins **(151, 152)** is formed by a so-called heat sink having an adsorbent, such as zeolite, carried over the surface thereof. The adsorption fins **(151, 152)** constitute an adsorption member. The Peltier element **(153)** is joined at one surface to the first adsorption fin **(151)** and at the opposite surface to the second adsorption fin **(152).** With a direct current flowing through the Peltier element **(153),** one of the two adsorption fins corresponds to the heat absorbing side, and the other corresponds to the heat releasing side. This Peltier element **(153)** constitutes a heat source.

This humidity control system **(10)** repeats the first operation mode and the second operation mode. Where the first adsorption fin **(151)** corresponds to the heat releasing side and the second adsorption fin **(152)** corresponds to the heat absorbing side, the humidity control unit **(150)** in the first operation mode regenerates the adsorbent of the first adsorption fin **(151)** to humidify the air and, meanwhile, allows moisture to be adsorbed by the adsorbent of the second adsorption fin **(152)** to dehumidify the air. Where the first adsorption fin **(151)** corresponds to the heat absorbing side and the second adsorption fin **(152)** corresponds to the heat releasing side, the humidity control unit **(150)** in the first operation mode regenerates the adsorbent of the second adsorption fin **(152)** to humidify the air and, meanwhile, allows moisture to be adsorbed by the adsorbent of the first adsorption fin **(151)** to dehumidify the air. This humidity control system **(10)** alternately performs the dehumidification operation of supplying air dehumidified by the passage of the air through the humidity control unit **(150)** to the room and a humidification operation for supplying air humidified by the passage of the air through the humidity control unit **(150)** to the room.

Note that the embodiments described so far are preferred examples in nature and not intended to limit the scope, applications and use of the invention.

### INDUSTRIAL APPLICABILITY

As described above, the present invention is useful for humidity control systems which control the air humidity using an adsorbent.

## Claims

1. A humidity control system, comprising a refrigerant circuit **(50)** running a refrigeration cycle to which an adsorption heat exchanger **(51, 52)** carrying an adsorbent is connected, wherein
the humidity control system controls the humidity of air which is in contact with an adsorbent of the adsorption heat exchanger **(51, 52)** by heating or cooling the adsorbent with a refrigerant of the refrigerant circuit **(50)** and performs a humidification operation of supplying humidified air to a room or a dehumidification operation of supplying dehumidified air to a room, and
the humidity control system includes a controller **(90)** which stops a compressor **(53)** of the refrigerant circuit **(50)** if during the dehumidification operation an actually measured value of the room temperature is lower than a selected value of the room temperature by a predetermined temperature difference or more or if during the humidification operation the actually measured value of the room temperature is higher than the selected value of the room temperature by a predetermined temperature difference or more.

2. A humidity control system, comprising a refrigerant circuit **(50)** running a refrigeration cycle to which an adsorption heat exchanger **(51, 52)** carrying an adsorbent is connected, wherein
the humidity control system controls the humidity of air which is in contact with an adsorbent of the adsorption heat exchanger **(51, 52)** by heating or cooling the adsorbent with a refrigerant of the refrigerant circuit **(50)** and performs a humidification operation of supplying humidified air to a room or a dehumidification operation of supplying dehumidified air to a room,
the humidity control system includes a controller **(90)** for controlling the performance of a compressor **(53)** of the refrigerant circuit **(50),** and
the controller **(90)** is configured to perform a temperature control operation of reducing the performance of the compressor **(53)** of the refrigerant circuit (50) if during the dehumidification operation an actually measured value of the room temperature is lower than a selected value of the room temperature by a predetermined temperature difference or more or if during the humidification operation the actually measured value of the room temperature is higher than the selected value of the room temperature by a predetermined temperature difference or more.

3. A humidity control system, comprising a refrigerant circuit **(50)** running a refrigeration cycle to which an adsorption heat exchanger **(51, 52)** carrying an adsorbent is connected, wherein
the humidity control system controls the humidity of air which is in contact with an adsorbent of the adsorption heat exchanger **(51, 52)** by heating or cooling the adsorbent with a refrigerant of the refrigerant circuit **(50)** and performs a humidification operation of supplying humidified air to a room or a dehumidification operation of supplying dehumidified air to a room,
the humidity control system includes a controller **(90)** for controlling the performance of a compressor **(53)** of the refrigerant circuit **(50)** based on a target value of a room humidity, and
the controller **(90)** is configured to perform a temperature control operation such that
if during the dehumidification operation an actually measured value of the room temperature is lower than a selected value of the room temperature by a predetermined temperature difference or more, the controller **(90)** forcibly increases the target value of the room humidity, and
if during the humidification operation the actually measured value of the room temperature is higher than the selected value of the room temperature by a predetermined temperature difference or more, the controller **(90)** forcibly decreases the target value of the room humidity.

4. The humidity control system of claim 2 or 3, wherein the controller **(90)** is configured to stop the compressor **(53)** if the actually measured value of the room temperature continues to be lower than the selected value of the room temperature by the predetermined temperature difference or more during the dehumidification operation, or higher than the selected value of the room temperature by the predetermined temperature difference or more during the humidification operation, even after the lapse of a predetermined time since the start of the temperature control operation.

5. A humidity control system, comprising a refrigerant circuit **(50)** running a refrigeration cycle to which an adsorption heat exchanger **(51, 52)** carrying an adsorbent is connected, wherein
the humidity control system controls the humidity of air which is in contact with an adsorbent of the adsorption heat exchanger **(51, 52)** by heating or cooling the adsorbent with a refrigerant of the refrigerant circuit **(50)** and performs a humidification operation of supplying humidified air to a room or a dehumidification operation of supplying dehumidified air to a room,
the humidity control system includes a controller **(90)** capable of performing a performance control operation of controlling the performance of a compressor **(53)** of the refrigerant circuit **(50)** such that the temperature of air supplied into the room becomes equal to a predetermined target supply air temperature, and
the controller **(90)** is configured to operate such that
if during the dehumidification operation an actually measured value of the room temperature is lower than a selected value of the room temperature by a predetermined temperature difference or more, the controller **(90)** performs the performance control operation with the target supply air temperature being set to a value equal to or higher than the selected value of the room temperature, and
if during the humidification operation the actually measured value of the room temperature is higher than the selected value of the room temperature by a predetermined temperature difference or more, the controller **(90)** performs the performance control operation with the target supply air temperature being set to a value equal to or lower than the selected value of the room temperature.

6. A humidity control system, comprising a refrigerant circuit **(50)** running a refrigeration cycle to which an adsorption heat exchanger **(51, 52)** carrying an adsorbent is connected, wherein
the humidity control system controls the humidity of air which is in contact with an adsorbent of the adsorption heat exchanger **(51, 52)** by heating or cooling the adsorbent with a refrigerant of the refrigerant circuit **(50)** and performs a humidification operation of supplying humidified air to a room or a dehumidification operation of supplying dehumidified air to a room,
the humidity control system includes a controller **(90)** capable of performing a performance control operation of controlling the performance of a compressor **(53)** of the refrigerant circuit **(50)** such that during the dehumidification operation the refrigerant evaporation temperature in the adsorption heat exchanger **(51, 52)** becomes equal to a predetermined target evaporation temperature and such that during the humidification operation the refrigerant condensation temperature in the adsorption heat exchanger **(51, 52)** becomes equal to a predetermined target condensation temperature,
the controller **(90)** is configured to operate such that
if during the dehumidification operation an actually measured value of the room temperature is lower than a selected value of the room temperature by a predetermined temperature difference or more, the controller **(90)** performs the performance control operation with the target evaporation temperature being set to a value equal to or higher than the selected value of the room temperature, and
if during the humidification operation the actually measured value of the room temperature is higher than the selected value of the room temperature by a predetermined temperature difference or more, the controller **(90)** performs the performance control operation with the target condensation temperature being set to a value equal to or lower than the selected value of the room temperature.

7. The humidity control system of claim 5 or 6, wherein the controller **(90)** is configured to stop the compressor **(53)** if the actually measured value of the room temperature continues to be lower than the selected value of the room temperature by the predetermined temperature difference or more during the dehumidification operation, or higher than the selected value of the room temperature by the predetermined temperature difference or more during the humidification operation, even after the lapse of a predetermined time since the start of the performance control operation.

8. A humidity control system, comprising a refrigerant circuit **(50)** to which first and second adsorption heat exchangers **(51, 52)** each carrying an adsorbent are connected, wherein
the humidity control system alternately performs a first refrigeration cycle operation where one of the first and second adsorption heat exchangers **(51, 52)** works as a condenser and the other works as an evaporator and a second refrigeration cycle operation where the one of the first and second adsorption heat exchangers **(51, 52)** works as an evaporator and the other works as a condenser,
the humidity control system humidifies air in the adsorption heat exchanger **(51, 52)** working as the condenser while simultaneously dehumidifying air in the adsorption heat exchanger **(51, 52)** working as the evaporator and performs a dehumidification operation of supplying the dehumidified air to a room or a humidification operation of supplying the humidified air to a room, and
the humidity control system includes a controller **(90)** which shortens a time interval at which the first refrigeration cycle operation and the second refrigeration cycle operation are switched if during the dehumidification operation an actually measured value of the room temperature is lower than a selected value of the room temperature by a predetermined temperature difference or more or if during the humidification operation the actually measured value of the room temperature is higher than the selected value of the room temperature by a predetermined temperature difference or more.

9. A humidity control system, comprising a refrigerant circuit **(50)** to which first and second adsorption heat exchangers **(51, 52)** each carrying an adsorbent are connected, wherein
the humidity control system alternately performs a first refrigeration cycle operation where one of the first and second adsorption heat exchangers **(51, 52)** works as a condenser and the other works as an evaporator and a second refrigeration cycle operation where the one of the first and second adsorption heat exchangers **(51, 52)** works as an evaporator and the other works as a condenser,
the humidity control system humidifies air in the adsorption heat exchanger **(51, 52)** working as the condenser while simultaneously dehumidifying air in the adsorption heat exchanger **(51, 52)** working as the evaporator and performs a dehumidification operation of supplying the dehumidified air to a room or a humidification operation of supplying the humidified air to a room, and
the humidity control system includes a controller **(90)** which extends a time interval at which the first refrigeration cycle operation and the second refrigeration cycle operation are switched if during the dehumidification operation an actually measured value of the room temperature is lower than a selected value of the room temperature by a predetermined temperature difference or more or if during the humidification operation the actually measured value of the room temperature is higher than the selected value of the room temperature by a predetermined temperature difference or more.

10. A humidity control system, comprising a refrigerant circuit **(50)** to which first and second adsorption heat exchangers **(51, 52)** each carrying an adsorbent are connected, wherein
the humidity control system alternately performs a first refrigeration cycle operation where one of the first and second adsorption heat exchangers **(51, 52)** works as a condenser and the other works as an evaporator and a second refrigeration cycle operation where the one of the first and second adsorption heat exchangers **(51, 52)** works as an evaporator and the other works as a condenser,
the humidity control system humidifies air in the adsorption heat exchanger **(51, 52)** working as the condenser while simultaneously dehumidifying air in the adsorption heat exchanger **(51, 52)** working as the evaporator and performs a dehumidification operation of supplying the dehumidified air to a room or a humidification operation of supplying the humidified air to a room, and
the humidity control system includes a controller **(90)** which alternately selects an alternation mode where the first refrigeration cycle operation and the second refrigeration cycle operation are alternately performed and a fixed mode where only the first refrigeration cycle operation or the second refrigeration cycle operation is performed for a predetermined time if during the dehumidification operation an actually measured value of the room temperature is lower than a selected value of the room temperature by a predetermined temperature difference or more or if during the humidification operation the actually measured value of the room temperature is higher than the selected value of the room temperature by a predetermined temperature difference or more.

11. A humidity control system, comprising an adsorption member (**51, 52**, ...) carrying an adsorbent and a heat source **(50, 100, 153)** for at least heating the adsorbent of the adsorption member (**51, 52,** ...), wherein
the humidity control system controls the humidity of air which is in contact with the adsorbent of the adsorption member **(51, 52,** ...) and performs a humidification operation of supplying humidified air to a room or a dehumidification operation of supplying dehumidified air to a room,
the humidity control system includes a controller **(90)** capable of performing a capacity control operation of controlling the capacity of the heat source **(50, 100, 153)** such that the temperature of the air supplied to the room equals to a target supply air temperature, and
the controller **(90)** is configured to operate such that
if during the dehumidification operation an actually measured value of the room temperature is lower than a selected value of the room temperature by a predetermined temperature difference or more, the controller **(90)** performs the capacity control operation with the target supply air temperature being set to a value equal to or higher than the selected value of the room temperature, and
if during the humidification operation the actually measured value of the room temperature is higher than the selected value of the room temperature by a predetermined temperature difference or more, the controller **(90)** performs the capacity control operation with the target supply air temperature being set to a value equal to or lower than the selected value of the room temperature.
